**Europäisches Patentamt**

**European Patent Office**

**Office européen des brevets**

(11) Publication number: **0 134 658**
**B1**

# EUROPEAN PATENT SPECIFICATION

(12)

(45) Date of publication of patent specification: **30.01.91**

(21) Application number: **84304675.6**

(22) Date of filing: **09.07.84**

(51) Int. Cl.⁵: **A 21 D 8/04,** A 21 D 2/32, A 21 D 2/26

(54) Vital Gluten.

(30) Priority: **13.07.83 JP 127107/83**
**07.10.83 JP 187756/83**

(43) Date of publication of application:
**20.03.85 Bulletin 85/12**

(45) Publication of the grant of the patent:
**30.01.91 Bulletin 91/05**

(84) Designated Contracting States:
**BE DE FR GB NL**

(56) References cited:
**EP-A-0 075 463**
**EP-A-0 109 244**

(73) Proprietor: **KYOWA HAKKO KOGYO CO., LTD.**
**6-1, Ohte-Machi 1-chome**
**Chiyoda-ku Tokyo-to (JP)**

(72) Inventor: **Ohta, Shigenori**
**3-6-17, Iwatokita**
**Komae-shi Tokyo (JP)**
Inventor: **Inoue, Seijiro**
**3-6-6, Asahi-machi**
**Machida-shi Tokyo (JP)**
Inventor: **Tezuka, Toshihiko**
**4845-4, Ami Ami-cho**
**Inashiki-gun Ibaraki-ken (JP)**

(74) Representative: **Lambert, Hugh Richmond et al**
**D. YOUNG & CO. 10 Staple Inn**
**London, WC1V 7RD (GB)**

Courier Press, Leamington Spa, England.

**Description**

The present invention relates to vital gluten. More particularly, the present invention relates to a process for producing a novel vital gluten having excellent properties as a food improving agent, and useful as a food improving agent for processed food products of wheat flour such as bread, pasta and noodles; marine fish jelly products such as kamaboko and fish sticks; and processed meat foods such as hamburgers and sausages.

The basic process for producing vital gluten comprises adding water to wheat flour and kneading the mixture to prepare a dough, washing the dough to remove starch and water-soluble components leaving behind the wet gluten, and finally drying and pulverising the wet gluten. This basic procedure forms the basis of several industrial processes for the manufacture of vital gluten.

In the most general process, wet gluten is obtained by adding 0.6 to 0.9 part of water to 1 part of wheat flour and kneading the mixture to form a dough, allowing the dough to stand for 30 to 60 minutes, and then washing to remove the starch and other water-solubles to leave a wet gluten. This wet gluten is sometimes used as it is, but in most cases it is first dried to a powder. For example, dried vital gluten is obtained either by dispersing the wet gluten in water with the aid of ammonia and spray drying the resultant dispersion, or by pulverizing and drying the wet gluten in an air flow, i.e. by flash drying.

For improving the properties of vital gluten thus produced, various methods have been proposed in the art.

For example, in U.S. Patent 3,880,824, it is disclosed that vital gluten, obtained by reacting vital gluten powder with ionic or non-ionic lipids in an inert organic solvent, has excellent dispersibility in water. In this U.S. patent, phospholipid is listed as an example of an ionic lipid. However, the method of this U.S. patent involves an economic drawback since the powdered vital gluten has to be subjected to secondary processing. Also, since the lipids are not bound to the vital gluten proteins, the improvement obtained is small, see U.S. patent 4,200,569.

In U.S. patent 4,200,569, it is disclosed that the bound form of vital gluten, in combination with an anionic surfactant, provides an excellent action for improving bread. Sodium dodecyl sulfate and diacetyl tartrate are disclosed as suitable anionic surfactants. Phospholipids such as soybean lecithin on the other hand are said to be inapplicable. That process is, however, disadvantageous in that the proposed surfactants are all synthetic compounds not generally acceptable in food processing.

In Japanese Published Unexamined Patent Application No. 102148/82, it is disclosed that vital gluten powders having good dispersibility in water are obtained by adding a phospholipid mixture to water-containing vital gluten, homogenzing and then drying and pulverizing. According to this process, dispersibility in water is improved but there is no general improvement in its utility as a food improving agent, for example in improving bread.

As generally known, phospholipids are substances in which aliphatic acids are ester-bound to the hydroxy groups at the 1- and 2-positions of glycerol, whilst the hydroxy group at the 3-position is bound, via phosphoric acid, to an organic base such as choline, ethanolamine, etc., to a sugar alcohol such as inositol or glycerol, etc., or to an amino acid such as serine. They are collectively referred to as diacyl glycerophospholipids. Monoacyl glycerophospholipids are phospholipids obtained by removing 1 molecule of aliphatic acids from diacyl glycerophospholipids.

Gluten proteins are able to bind to phospholipids in an aqueous environment. Accordingly, during the process for production of gluten, about 0.2% (w/w) of the phospholipid (excuding phospholipid enclosed in starch particles) present in wheat flour is bound to gluten proteins; in vital gluten, generally about 1% (w/w) of phospholipid is contained as bound phospholipid.

As a result of investigations on interaction between gluten proteins and phospholipids and influences on their food improving action, the present inventors have found that when the phospholipids are monoacyl glycerophospholipids, not ordinary diacyl glycerophospholipids, the complex of the phospholipids and gluten proteins exhibits an excellent food improving action, and this forms the basis of the present invention.

Accordingly, the present invention provides a process for the production of vital gluten, wherein before or after drying, the gluten is treated to enhance the monoacyl glycerophospholipid component of the bound phospholipid content of the gluten relative to the diacyl glycerophospholipid component of said bound phospholipid.

This increase in monoacyl glycerophospholipid content can be achieved in various ways. In a first method, endogenous phospholipids in the gluten can be converted into monoacyl glycerophospholipids.

In wheat flour approximately 0.2% (w/w) of phospholipids are present as described above (phospholipids enclosed in starch particles are not dissolved out of starch particles during the production of gluten and accordingly are not bound to gluten proteins). The phospholipids are bound to gluten proteins during the production of gluten, approximately $\frac{1}{3}$ of which is monoacyl glycerophospholipid and the remaining about $\frac{2}{3}$ is diacyl glycerophospholipid. The direct conversion of these diacyl glycerophospholipids into monoacyl glycerophospholipids can be achieved by reacting the diacyl glycerophospholipids in the gluten with phospholipase A (hereinafter referred to as PL—A) prior to drying the vital gluten. Preferably the PL—A is added during the kneading step. The amount of PL—A required varies depending upon the time and temperature of kneading but in general, 100 to 10,000 units of PL—A are used per 1 kg of wheat flour.

This first process according to the invention is the simplest and is easily workable on an industrial scale but, since the content of endogenous phospholipids in wheat flour is small, the proportion of monoacyl glycerophospholipids in the treated vital gluten is small. Thus the ability to bind the gluten proteins is also rather low. A better method is therefore to add exogenous phospholipids to the wheat flour along with the PL—A thereby to enhance the content of monoacyl glycerophospholipids in the final product and to enhance the binding with the gluten proteins.

A second process according to the present invention therefore comprises adding phospholipids to the wheat flour and reacting the total diacyl glycerophospholipids thus provided with PL—A prior to drying of the product vital gluten. As in the first process, the PL—A and exogenous phospholipids are best incorporated during the kneading step. As the exogenous phospholipid, soybean lecithin is preferred as being both inexpensive and industrially available. Other phospholipids, however, may also be employed. The amount used is in the range of 0.1 to 10% (w/w), preferably from 0.5 to 5% (w/w). Preferably the phospholipids are first dispersed in water before adding them to the flour.

As in the first embodiment, the amount of PL—A added varies depending upon kneading conditions, but in general, from 50,000 to 100,000 units of PL—A are employed per 1 kg of added phospholipid.

In a third process according to the present invention, exogenous phospholipids are first converted into phospholipids having a high content of monoacyl glycerophospholipids, for example, by reacting with PL—A, and then added to the vital gluten to bind to the gluten proteins. This process involves the following advantages.

(1) By controlling conditions for the conversion reaction, the content of monoacyl glycerophospholipid in the added phospholipid can freely be chosen.

(2) The conversion reaction can be practiced without being limited by pH and temperature considerations of the wheat flour dough. Accordingly, in the case of conversion using PL—A, the conversion can be achieved under weakly alkaline conditions which are the optimum reaction conditions for the enzyme, and at relatively high temperatures. As a result, the reaction time can be shortened and the amount of enzyme required reduced.

(3) The converted phospholipid can be added not only during the kneading step but instead to separated wet gluten prior to drying, or even to already dried vital gluten powder. For example, vital gluten according to the present invention can be produced either by mixing and dispersing the conversion-treated phospholipid in wet gluten followed by an air flow drying method such as flash drying, or by incorporating and dispersing the conversion-treated phospholipid in a dispersion of wet gluten followed by spray drying. Alternatively the conversion-treated phospholipid can simply be dry mixed with the dry vital gluten powder.

For converting the diacyl glycerophospholipids to phospholipids having a high content of monoacyl glycerophospholipids, three methods are presently known in the art, and any of these three methods can be used in this invention. The three methods are enzymatic using phospholipase A, and chemical methods involving heat treatment with acid or alkali.

The enzymatic method using phospholipase A may be practiced at low temperatures under neutral or weakly alkaline conditions, as compared to the chemical methods. This method is preferred since the chance of colour formation is low and no special apparatus is required. The preferred conditions for the conversion treatment with the enzyme are as follows:

| | |
|---|---|
| Concentration of phospholipid: | 5—20% (w/w) |
| Amount of enzyme added: | 1,000—50,000 units/kg of phospholipid |
| Ca concentration: | 0—100 mM |
| Raction pH: | 6—11 |
| Reaction temperature: | 20—60°C |
| Reaction time: | 10—120 minutes. |

Methods of conversion using acids or alkalis are described, for example, in U.S. Patent 3,576,831 and 3,505,074. In these methods, the conversion reaction is carried out by heating at 25 to 100°C at pH 2 to 12; according to the results obtained by the present inventors, prolonged reaction times are generally required except when carried out at temperatures above 100°C. There the conversion reaction can be effected in a relatively short period of time as shown in the following examples.

The amount of converted phospholipid added to the vital gluten in accordance with this third process is generally the same as for the second process described above. Preferably the content of monoacyl glycerophospholipids in the conversion-treated phospholipids is 30 mol% or more.

The vital gluten obtained in accordance with the present invention is characterized by a high content of bound phospholipid and by a high content of monoacyl glycerophospholipid in the bound phospholipid. In

3

ordinary vital gluten, the content of bound phospholipid is approximately 1% as shown in the following examples, and the proportion of monoacyl glycerophospholipid is usually 20 to 40 mol%. Further, in ordinary phospholipids (e.g. soybean phospholipids) used as raw materials in the second and third processes of the present invention, the content of monoacyl glycerophospholipids is low and is usually less than 4%. Accordingly, even through such phospholipids are bound to gluten proteins as they are, the content of monoacyl glycerophospholipids in the bound phospholipids is low and the effect is poor although the amount of the bound phospholipid increases.

In the vital gluten obtained by the present invention, the content of monoacyl glycerophospholipid in the bound phospholipid is 50 mol% or more. Such vital gluten is novel and is useful as a food improver. For example, vital gluten obtained by the second and third processes, described above and which has a bound phospholipid content of 2% (w/w) or more, exhibits a strong improving activity on food quality and is particularly useful as a food improver.

Further even though the content of the bound monoacyl glycerophospholipids may be less than 50 mol%, the food improving activity is still superior to that of conventional vital gluten if the content of the bound phospholipids is 2% (w/w) or more and the content of the bound monoacyl glycerophospholipids is 30 mol% or more.

The function of gluten protein in wheat flour, in particular, the binding ability of phospholipids which is an important function for the present invention, greatly varies depending upon raw wheat flour used for the production of vital gluten. This variation is similar to the binding ability of lipids in bread dough and is generated by the protein content of wheat flour and the quality of wheat flour used in baking bread. The range and factors of this variation are discussed in, e.g., Food Technology, vol. 22, page 1157 (1968). Accordingly, the novel vital gluten of the present invention can be produced by controlling various conditions of the three processes explained in detail hereinabove, depending upon wheat flour as raw material, although the various conditions for obtaining the novel vital gluten of the present invention cannot clearly be set forth.

The effects and advantages of the present invention are as follows:

(1) excellent action in improving food quality, particularly products based on wheat flour. Although conventional vital gluten also acts to improve food quality, the effect is far less than that of the vital gluten of the present invention;

(2) excellent dispersibility in water;

(3) the technology can easily be carried out without adding any major modifications to the hitherto known technology for producing vital gluten.

The preparation of the PL—A used in the present invention and the various test methods referred to, for example the measurement of PL—A activity, are explained below.

(1) Measurement of PL—A activity

The method for measuring this activity is based on the quantitative determination of free fatty acids formed by reaction of the enzyme with a substrate comprising a purified soybean phospholipid mixture using a commercially available quantitative analysis kit.

The composition of the enzyme substrate is shown in Table 1. The phospholipid solution used as substrate is prepared by dispersing 2% (w/w) of an aqueous purified soybean phospholipid mixture (made by Tsuru Lecithin Co., Ltd., trademark, SLP-White) in water using a high speed rotary homogenizer.

## Table 1

| | | |
|---|---|---|
| A. | 0.1% (w/w) PL-A solution | 0.2 ml |
| B. | 0.1M calcium chloride solution | 0.1 ml |
| C. | 0.2M acetate-sodium acetate buffer (pH 5.5) | 0.5 ml |
| D. | deionized water | 0.2 ml |
| E. | aqueous phospholipid dispersion | 1.0 ml |

After mixing, a preliminary liquid mixture of A, B, C and D is warmed at 30°C for 5 minutes; E prewarmed to 30°C is then added and the enzyme reaction proceeds at 30°C. After ten minutes the reaction mixture is heated in boiling water for 15 minutes to stop the reaction. Quantitative determination of free fatty acids in the reaction mixture is conducted using Determiner NEFA (made by Kyowa Medex Co. Ltd.). One unit of PL—A activity is defined as the amount required to form 1 μmole of free fatty acid per minute.

(2) Measurement of bound phospholipids

When lipids in living body are classified depending upon the state when they are present, the lipids are generally classified into bound lipids that are bound to proteins and free lipids that are not bound. The free lipids are extracted with a non-polar organic solvent but the bound lipids are not extracted with any non-polar organic solvent, but extracted with a polar organic solvent. In the present invention, the phospholipids extracted from vital gluten with petroleum ether in an initial extraction step are termed free phospholipids, and phospholipids subsequently extracted with chloroform-methanol-sulfuric acid (2:1:0.001, by volume) are termed bound phospholipids. The method is as follows.

Vital gluten is weighed and extracted four times with a 10-fold weight of petroleum ether to remove free phospholipids. A second extraction is then performed four times with a 10-fold weight of a chloroform-methanol-sulfuric acid solvent mixture to obtain a bound phospholipid fraction. The phospholipids in the extracts are digested with acid and colorimetrically determined as inorganic phosphorus in a conventional manner. The value obtained by multiplying 31.7 by the amount of inorganic phosphorus is expressed as the amount of phospholipid. The coefficient is adopted from J.Am. Oil Chemists' Soc., vol 55, page 521 (1978). Where the monoacyl glycerophospholipid content in the phospholipid is high, this coefficient can be rather small, but for purpose of convenience, it is still adopted in order to be able to compare the phospholipid contents on a molar basis.

The bound phospholipid content is expressed by weight % based on powdered vital gluten.

(3) Measurement of the bound monoacyl glycerophospholipids in the bound phospholipids

After the free phospholipids are removed from vital gluten using petroleum ether, the bound phospholipids are extracted with a chloroform-methanol-sulfuric acid (2:1:0.001, by volume).

From the extract, the phospholipids are separated by thin layer chromatography in accordance with the method described in J. Sci. Food Agric., vol. 30, page 1131 (1979). Spots of diacyl glycerophospholipids and monoacyl glycerophospholipids are combined respectively and quantitatively determined as inorganic phosphorus to thereby determine the respective contents of the phospholipids. The bound monoacyl glycerophospholipid content is expressed as mol% in the bound phospholipids.

The measurement and indication of monoacyl glycerophospholipids in the phospholipid raw materials are also performed in a similar manner.

(4) Test method for baking of bread

The bread is prepared in accordance with the most common 70% sponge dough method by the procedure shown below. Vital gluten is used in an amount of 2% (w/w) based on wheat flour and the amount of water used in mixing the dough is 90 ml when no vital gluten is added and 100 ml when vital gluten is added.

Raw materials for sponge dough:

| | |
|---|---|
| Semi-strong wheat flour | 350 g |
| Yeast food (containing ascorbic acid) | 0.5 g |
| Bakers' yeast | 10 g |
| Vital gluten | 10 g |

← 200 ml of water

Sponge mixing

↓

Fermentation of sponge (28°C, 4 hours)

← Raw materials for dough

| | |
|---|---|
| Semi-strong wheat flour | 150 g |
| Sugar | 30 g |
| Salt | 10 g |
| Skim milk powder | 10 g |
| Shortening | 20 g |

← 90 ml or 100 ml of water

Dough mixing

↓

Floor time (28°C, 20 minutes)

↓

Dividing

↓

Bench time (room temperature, 15 minutes)

↓

Molding

↓

Proofing (40°C, 50 minutes)

↓

Baking (220°C, 25 minutes)

↓

Bread

The specific volume (cc/g) of the baked bread is measured by the rape seed displacement method. The degree of staling is measured using a Baker's Compressimeter after allowing the bread to stand at 13°C overnight and is expressed as relative degree of staling, with the value of bread without addition of vital gluten being taken as 100.

(5) PL—A preparation

Pancreatin from pigs (product of Miles Co.) is formed into a 10% (w/w) aqueous dispersion and the pH is adjusted to 3.5 with 6N hydrochloric acid. The dispersion is heated to 75°C for 20 minutes to inactivate the proteases and lipases contained in pancreatin. The same amount of lactose is then added and the mixture freeze-dried. The PL—A activity of the dried enzyme preparation is 420 units/g.

The invention is illustrated by the following representative examples.

Example 1

In this example, the improving action of vital gluten produced by the first method of this invention in bread is shown in comparison with three vitals glutens presently available commercially.

To 1 kg of strong wheat flour were added 800 ml of water and 5 g (2,100 units) of PL—A prepared as above, and the mixture kneaded to form a dough. After kneading, the dough was allowed to rest at 30°C for 60 minutes. Starch was removed by washing 5 times using 2 litres of water per 28 g (1 ounce) thereby to obtain a wet gluten. After freeze drying, the gluten was pulverized to obtain 130 g of vital gluten powder. For comparison, 135 g of vital gluten powder was prepared by a similar procedure, but without addition of PL—A.

The results of evaluation of these two vital glutens and commercially available glutens are shown in Table 2.

## Table 2

| Results of Analysis and Bread Baking Test | No Vital Gluten Addition | Vital Gluten (control) | Vital Gluten (The present invention) | Commercially Available Vital Gluten | | |
|---|---|---|---|---|---|---|
| | | | | No. 1 | No. 2 | No. 3 |
| Bound phospholipid content (wt%) | - | 0.90 | 0.71 | 0.64 | 0.42 | 0.63 |
| Bound monoacyl glycerophospholipid content (mol%) | - | 29 | 72 | 30 | 32 | 33 |
| Specific volume of bread (cc/g) | 4.45 | 4.65 | 4.75 | 4.65 | 4.64 | 4.65 |
| Degree of staling of bread | 100 | 93 | 86 | 93 | 94 | 94 |

Notes: Commercially available vital gluten

    No. 1  -  made by Riken Vitamin Co., Ltd., Emasoft EX-100

    No. 2  -  made by Showa Sangyo Co. Ltd., Showa Powder Glu A

    No. 3  -  made by Glico Eiyo Shokuhin Co. Ltd., A Glu-R

In the vital gluten of the present invention, the content of the bound monoacyl glycerophospholipids is higher than that in other vital glutens, and the action of improving bread is also excellent.

Example 2

In this example, the production of vital gluten by the second process of this invention is described and also its activity as an improver for bread.

To 1 kg of strong wheat flour were added 700 ml of water, 100 g of a 10% (w/w) aqueous dispersion of purified soybean lecithin (made by Tsuru Lecithin Co. Ltd., SLP-White) and 5 g (2,100 units) of PL—A

EP 0 134 658 B1

prepared as above. 133 g of vital gluten powder was obtained in a manner similar to Example 1. For comparison, 135 g of vital gluten was prepared containing neither soybean lecithin nor PL—A (vital gluten I) and a further 133 g prepared containing soybean lecithin alone (vital gluten II).

The results of evaluation of these vital glutens are shown in Table 3.

### Table 3

| Results of Analysis and Bread Baking Test | No Vital Gluten Addition | Vital Gluten I (control) | Vital Gluten II (control) | Vital Gluten (The present invention) |
|---|---|---|---|---|
| Bound phospholipid content (wt%) | - | 0.92 | 4.68 | 4.36 |
| Bound monoacyl glycerophospholipid content (mol%) | - | 29 | 11 | 55 |
| Specific volume (cc/g) | 4.34 | 4.49 | 4.55 | 4.70 |
| Degree of staling of bread | 100 | 95 | 93 | 83 |

In vital gluten II, containing added phospholipid but no PL—A, the amount of bound phospholipid is higher than that in vital gluten according to the present invention, but the proportion of monoacyl glycerophospholipid is much lower. The improving action in bread baking is consequently also much weaker. In contrast, in the vital gluten of the present invention, both the bound phospholipid content and the bound monoacyl glycerophospholipid content are high and exellent improving action in bread baking is exhibited. Further, in the case of dispersing these vital glutens in water, the vital gluten of the present invention showed extremely good dispersibility as compared to vital glutens I and II.

### Example 3

In this example, vital gluten produced by the third process of this invention is illustrated.

To 100 g of a 10% (w/w) aqueous dispersion of purified soybean lecithin used in Example 2 was added calcium chloride at 20 mM. 400 mg (168 units) of PL—A were then added and the mixture allowed to react at pH 9.0 and 50°C for 60 minutes to obtain a phospholipid dispersion having a monoacyl glycerophospholipid content of 51 mol%.

The dispersion was then added to a dough formed from 1 kg of strong wheat flour and 700 ml of water. The dough was then washed and dried in a manner similar to Example 1, yielding 133 g of dried vital gluten powder.

The results of evaluation of this vital gluten in the baking of bread are shown in Table 4.

### Table 4

| Results of Analysis and Bread Baking Test | No Vital Gluten Addition | Vital Gluten |
|---|---|---|
| Bound phospholipid content (wt%) | - | 4.20 |
| Bound monoacyl glycero-phospholipid content (mol%) | - | 60 |
| Specific volume (cc/g) | 4.45 | 4.80 |
| Degree of staling of bread | 100 | 78 |

In the vital gluten of the present invention, both the bound phospholipid content and the bound monoacyl glycerophospholipid content are high and the improving action in the baking of bread is excellent.

### Example 4

In this example, vital gluten according to this invention is prepared by pre-reacting phospholipids with PL—A and adding the product to a previously prepared wet gluten.

8

497 g of wet gluten obtained from 1 kg of strong wheat flour and 900 ml of water were dispersed in 22 ml of 28% (w/w) aqueous ammonia and the mixture stirred to obtain a homogeneous dispersion. To this dispersion was added a dispersion of soybean phospholipids pre-reacted with PL—A and prepared in a manner similar to Example 3. After stirring for 30 minutes, the mixture was spray dried to give 140 g of vital gluten. For comparison, 130 g of vital gluten was prepared containing no soybean phospholipid or PL—A (vital gluten I), and a further 140 g was prepared containing soybean phospholipid only (vital gluten II).

The results of evaluation of these vital glutens are shown in Table 5.

### Table 5

| Results of Analysis and Bread Baking Test | No Vital Gluten Addition | Vital Gluten I (control) | Vital Gluten II (control) | Vital Gluten (The present invention) |
|---|---|---|---|---|
| Bound phospholipid content (wt%) | - | 1.02 | 4.89 | 4.05 |
| Bound monoacyl glycerophospholipid content (mol%) | - | 30 | 12 | 58 |
| Specific volume (cc/g) | 4.29 | 4.43 | 4.48 | 4.68 |
| Degree of staling of bread | 100 | 96 | 93 | 80 |

In the vital gluten of the present invention, both the bound phospholipid content and the bound monoacyl glycerophospholipid content are high and the improving action in bread is excellent. By contrast the vital gluten obtained by adding phospholipids not pre-reacted with PL—A shows only a poor improving action.

### Example 5

In this example, vital gluten is prepared by adding phospholipids wherein the monoacyl glycerophospholipid content is enhanced by heat treatment in acid.

100 g of 10% (w/w) purified soybean lecithin dispersion prepared as in Example 2 was adjusted to pH 3.0 with 4N hydrochloric acid and heated at 120°C for 60 minutes. The pH was then raised to 6.0 with 4N sodium hydroxide. The monoacyl glycerophospholipid content of the converted phospholipid product was 45 mol%.

133 g of vital gluten according to this invention was then prepared using this phospholipid dispersion in a manner similar to Example 2.

The bound phospholipid content of the vital gluten was 3.90% (w/w) and the bound monoacyl glycerophospholipid content was 53 mol%. This vital gluten shows excellent improving action in the braking of bread.

### Example 6

In this example, vital gluten according to this invention is prepared by the third process using phospholipids in which the monoacyl glycerophospholipid content is enhanced by heat treatment in alkali.

100 g of a 10% (w/w) purified soybean lecithin dispersion as used in Example 2 was adjusted to a pH value of 11 with 4N sodium hydroxide. It was then heated at 120°C for 60 minutes following which the pH was adjusted to 6.0 with 4N hydrochloric acid. The monoacyl glycerophospholipid content of the resulting phospholipids was 34 mol%. 134 g of vital gluten powder according to this invention was then prepared using this phospholipid dispersion in a manner similar to Example 2.

The bound phospholipid content of the resulting vital gluten was 4.05% (w/w) and the bound monoacyl glycerophospholipid content was 43 mol%. The improving activity of this vital gluten in the manufacture of bread was excellent.

### Example 7

In this example, a vital gluten according to this invention is prepared by the third process in which phospholipids previously reacted with PL—A are added during kneading of the wheat flour dough, the dispersibility of the vital gluten in water is evaluated, and the effect thereof in the manufacture of sausages is described.

A 10% (w/w) aqueous dispersion of purified soybean lecithin was adjusted to a pH value of 9.0 with sodium hydroxide, followed by the addition of 0.4% (w/w) PL—A and calcium chloride to a concentration of 10 mM. After reacting at 50°C for 60 minutes, the reaction was stopped by heating at 90°C for 20 minutes. The resulting phospholipid dispersion had a monoacyl glycerophospholipid content of 64 mol% based on total phospholipids. Next, this dispersion was mixed with an unreacted 10% (w/w) lecithin dispersion to obtain phospholipid dispersions having monoacyl glycerophospholipid contents of 0, 16, 32, 48 and 64 mol%, respectively.

To each of five 1 kg quantities of strong wheat flour were added 600 g of water and 200 g of a different one of the aforesaid phospholipid dispersions, and the mixtures kneaded to prepare doughs. These doughs were washed with water to obtain wet gluten which was then freeze dried and pulverized to provide five vital gluten products, (vital glutens I to V). The bound phospholipid content, the monoacyl glycerophospholipid content in the bound phospholipids, and the dispersibility of these vital glutens in water are shown in Table 6. The dispersibility in water was judged from a dispersed state of the vital gluten when 50 ml of water were added to 10 g of the vital gluten and the mixture mixed with a glass rod.

### Table 6

| Vital gluten | Bound phospholipid content (wt%) | Bound monoacyl glycero-phospholipid content (mol%) | Dispersibility in water |
|---|---|---|---|
| I | 5.50 | 6 | bad |
| II | 5.12 | 19 | fairly good |
| III | 4.85 | 34 | good |
| IV | 4.93 | 51 | very good |
| V | 4.45 | 68 | very good |

In using vital glutens containing phospholipids having only a low monoacyl glycerophospholipid content, heterogeneous gluten masses are formed when mixing with water and are dispersed only with great difficulty. As the monoacyl glycerophospholipid content increases the dispersibility improves.

Using the vital glutens I and IV, pork sausages were prepared according to the following recipe.

| | |
|---|---|
| Mince pork meat | 1,000 g |
| Salt | 25 g |
| Sodium nitrite | 100 mg |
| Lard | 300 g |
| Ice | 150 g |
| Sugar | 30 g |
| Sodium glutamate | 2 g |
| White pepper | 2 g |
| Nutmeg | 1 g |
| Vital gluten | 25 g |

The minced meat, salt and sodium nitrite were initially mixed, following which the vital gluten and 50 g of ice were added and mixing continued in a silent cutter. In the case of vital gluten IV, no powdering was observed, but powdering was observed with vital gluten I, the control. Next, the lard, seasonings, spices and 100 g of ice were added to prepare a meat emulsion, which was then filled into a casing. The sausages were then heated at 75°C for 30 minutes and cooled. On cooling, fat separation was observed in the control samples (vital gluten I), but not with vital gluten IV.

### Example 8

In this example, vital gluten according to the invention is prepared by the third process, in which phospholipids previously reacted with PL—A are added to a previously prepared wet gluten. Its

EP 0 134 658 B1

dispersibility in water is evaluated and the effects thereof when used in the manufacture of noodles is described.

To 1,000 g portions of wet gluten obtained from strong wheat flour were added 0, 25, 50, 100 and 200 g of a phospholipid dispersion having a monoacyl glycerophospholipid content of 64 mol% and obtained in a manner similar to Example 7. Sufficient water was added to provide a content of 2,000 g. 50 ml of concentrated aqueous ammonia was then added to disperse the gluten and the dispersions dried by spray drying to provide vital gluten powders (I to V).

The bound phospholipid content, the bound monoacyl glycerophospholipid content and dispersibility in water of these products are shown in Table 7.

### Table 7

| Vital gluten | Bound phospholipid content (wt%) | Bound monoacyl glycero-phospholipid content (mol%) | Dispersibility in water |
|---|---|---|---|
| I | 1.02 | 28 | no good |
| II | 1.55 | 40 | fairly good |
| III | 2.21 | 51 | good |
| IV | 3.10 | 68 | very good |
| V | 4.05 | 70 | very good |

As is evident from the results, the vital glutens having bound phospholipids of high monoacyl glycerophospholipid content in 2% (w/w) or more have excellent dispersibility in water.

Using vital glutens I and IV, Chinese noodles were prepared according to the following recipe.

| | |
|---|---|
| Semi-strong wheat flour | 9,800 g |
| Brine (powder) | 100 g |
| Water | 3,200 g |
| Salt | 50 g |
| Vital gluten | 200 g |

Using vital gluten IV, the noodle dough formed a noodle belt when roll molded having strong resistance to stretching and good flexibility; no breakage of the noodle belt was noted and excellent mechanical resistance was noted as compared to a noodle belt to which vital gluten I (the control) was added. After boiling the Chinese noodles at 98°C for 3 minutes, soup was added and its texture was evaluated by a panel of experts. The texture was further evaluated after allowing the soup to stand at room temperature for 1 hour. The results show that the noodles of the present invention (vital gluten IV) had good resistance to chewing and excellent elasticity both before and after standing.

### Example 9

In this example, vital gluten according to the invention is prepared by the third process, in which phospholipids, previously reacted with PL—A, are added to previously prepared dried gluten powder.

To 400 ml of a 15% (w/w) aqueous dispersion of purified soybean lecithin as used in Example 2 was added calcium chloride to a concentration of 20 mM. 1,200 mg (504 units) of PL—A were added and the mixture was allowed to react at pH 9.0 at 55°C for 2 hours to obtain a modified phospholipid dispersion wherein the content of monoacyl glycerophospholipid is 75 mol%. 100 ml of the modified phospholipid dispersion and 1,000 g of commercially available vital gluten No. 1, shown in Table 2, were then mixed with stirring and the mixture lyophilized and pulverized into a powdery gluten. The procedure was repeated three further times providing a total addition of 400 ml of the modified phospholipid. The bound phospholipid content of the final product vital gluten was 3.5% (w/w) and the bound monoacyl glycerophospholipid content was 68 mol%. The vital gluten showed excellent dispersibility in water and excellent improving action in bread as compared with the untreated commercially available vital gluten.

**Claims**

1. A process for the production of vital gluten which comprises forming a dough comprising wheat flour and water, kneading the dough, washing the dough to remove starch and other water-soluble components therefrom and to recover a wet gluten, and drying the wet gluten, characterised in that before or after drying the gluten is treated to enhance the monoacylglycerophospholipid component of the bound phospholipid content of the gluten relative to the diacylglycerophospholipid component of said bound phospholipid.

2. A process according to claim 1, characterised in that the monoacylglycerophospholipid content of the gluten is increased relative to the diacylglycerophospholipid content by incorporating phospholipase A into the dough before drying thereby to convert endogenous diacylglycerophospholipids enzymatically into endogenous monoacylglycerophospholipids.

3. A process according to claim 2, characterised in that the total phospholipid content of the gluten is additionally enhanced by the incorporation of exogenous glycerophospholipids into the dough before drying.

4. A process according to claim 3, characterised in that the exogenous glycerophospholipid component is or comprises diacylglycerophospholipids which are enzymatically converted *in situ* into monoacylglycerophospholipids by said phospholipase A.

5. A process according to claim 1, characterised in that the monoacylglycerophospholipid content of the gluten is enhanced by adding exogenous monoacylglycerophospholipids to the dough prior to drying.

6. A process according to claim 5, characterised in that the exogenous monoacylglycerophospholipids added to the dough are themselves obtained enzymatically by reacting a diacylglycerophospholipid feedstock with phospholipase A.

7. A process according to claim 5, characterised in that the exogenous monoacylglycerophospholipids added to the dough are themselves obtained chemically by treating a diacylglycerophospholipid feedstock with acid or alkali.

8. A modification of the process claimed in claim 5, 6 or 7, characterised in that the exogenous monoacylglycerophospholipid is incorporated into the gluten after drying.

9. Vital gluten characterised by a bound phospholipid content 2% (W/W) or more and a bound monoacylglycerophospholipid content which is at least 30 mol % but less than 50 mol % of the total bound phospholipid content.

10. Vital gluten characterised in that the content of bound monoacylglycerophospholipid is 50 mol% or more of the total bound phospholipid content.

11. Vital gluten according to claim 10, characterised by a total bound phospholipid content of 2% (W/W) or more.

12. A foodstuff containing vital gluten as an improving agent, characterised in that the vital gluten is a product obtained by a process in any one of claims 1—8 or as claimed in any one of claims 9—11.

## Patentansprüche

1. Verfahren zur Herstellung von Vital-Gluten, wobei man einen Teig aus Weizenmehl und Wasser formt, den Teig knetet, sodann um Stärke und andere wasserlösliche Bestandteile zu entfernen und feuchtes Gluten abzutrennen, den Teig wäscht und das feuchte Gluten trocknet, dadurch gekennzeichnet, daß man vor oder nach dem Trocknen das Gluten so behandelt, daß die Monoacylglycerophospholipidkomponente des gebundenen Phospholipidbestandteils des Glutens relativ zur Diacylglycerophospholipidkomponente erhöht wird.

2. Verfahren nach Anspruch 1, dadurch gekennzeichnet, daß der Monoacylglycerophospholipidgehalt des Glutens relativ zum Diacylglycerophospholipidgehalt erhöht wird, indem Phospholipase A mit dem Teig vor dem Trocknen vermischt wird, wobei die endogenen Diacylglycerophospholipide enzymatisch zu endogenen Monoacylglyceropospholipiden überführt werden.

3. Verfahren nach Anspruch 2, dadurch gekennzeichnet, daß der Gesamtgehalt an Phospholipid im Gluten zusätzlich erhöht wird, indem exogene Glycerophospholipide vor dem Trocknen mit dem Teig vermischt werden.

4. Verfahren nach Anspruch 3, dadurch gekennzeichnet, daß der exogene Glycerophospholipidgehalt aus Diacylglycerophospholipiden besteht oder diese umfaßt, die in situ enzymatisch durch Phospholipase A zu Monoacylglycerophospholipiden überführt werden.

5. Verfahren nach Anspruch 1, dadurch gekennzeichnet, daß der Monoacylglycerophospholipidgehalt des Glutens durch Zugabe von exogenen Monoacylglycerophospholipiden zum Teig vor dem Trocknen erhöht wird.

6. Verfahren nach Anspruch 5, dadurch gekennzeichnet, daß die exogenen Monoacylglycerophospholipide, die zum Teig hinzugegeben werden, selbst enzymatisch durch Umsetzung eines Diacylglycerophospholipidausgangsmaterials mit Phospholipase A erhalten werden.

7. Verfahren nach Anspruch 5, dadurch gekennzeichnet, daß die exogenen Monoacylglycerophospholipide, die zum Teig hinzugegeben werden, selbst chemisch durch Umsetzung eines Diacylglycerophospholipidausgangsmaterials mit einer Säure oder einer Base erhalten werden.

8. Ein modifiziertes Verfahren nach Anspruch 5, 6 oder 7, dadurch gekennzeichnet, daß das exogene Monoacylglycerophospholipid mit dem Gluten nach dem Trocknen vermischt wird.

9. Vital-Gluten, gekennzeichnet durch einen gebundenen Phospholipidgehalt von 2 Gew.-% oder mehr und einen gebundenen Monoacylglycerophospholipidgehalt, der mindestens 30 Mol-%, aber weniger als 50 Mol-% des gesamten gebundenen Phospholipidgehalts beträgt.

10. Vital-Gluten, dadurch gekennzeichnet, daß der Gehalt an gebundenem Monoacylglycerophospholipid 50 Mol-% oder mehr des gesamten gebundenen Phospholipidgehalts beträgt.

11. Vital-Gluten nach Anspruch 10, gekennzeichnet durch einen gebundenen Phospholipidgehalt von 2 Gew.-% oder mehr.

12. Nahrungsmittel, enthaltend Vital-Gluten als Verbesserungsmittel, dadurch gekennzeichnet, daß das Vital-Gluten ein Produkt ist, das durch eines der Verfahren der Ansprüche 1 bis 8 oder der Ansprüche 9 bis 11 erhalten wird.

**Revendications**

1. Procédé pour la production de gluten élastique, qui comprend la formation d'une pâte renfermant de la farine de froment et de l'eau, le pétrissage de la pâte, le lavage de la pâte pour en éliminer l'amidon et autres composants solubles dans l'eau et récupérer un gluten humide, et le séchage du gluten humide, caractérisé en ce que le gluten est traité, avant ou après séchage, pour augmenter la proportion du composant monoacylglycérophospholipide dans le phospholipide lié contenu dans le gluten, par rapport au composant diacylglycérophospholipide dudit phospholipide lié.

2. Procédé selon la revendication 1, caractérisé en ce que l'on augmente la teneur du gluten en monoacylglycérophospholipide par rapport à la teneur en diacylglycérophospholipide, en incorporant de la phospholipase A dans la pâte, avant séchage, pour convertir ainsi enzymatiquement les diacylglycérophospholipides endogènes en monoacylglycérophospholipides endogènes.

3. Procédé selon la revendication 2, caractérisé en ce que l'on augmente en outre la teneur totale du gluten en phospholipides par incorporation de glycérophospholipides exogènes à la pâte, avant séchage.

4. Procédé selon la revendication 3, caractérisé en ce que le composant glycérophospholipide exogène est constitué par, ou renferme, des diacylglycérophospholipides qui sont convertis enzymatiquement *in situ* en monoacylglycérophospholipides par ladite phospholipase A.

5. Procédé selon la revendication 1, caractérisé en ce que l'on augmente la teneur du gluten en monoacylglycérophospholipides par addition de monoacylglycérophospholipides exogènes à la pâte, avant séchage.

6. Procédé selon la revendication 5, caractérisé en ce que les monoacylglycérophospholipides exogènes ajoutés à la pâte sont eux-mêmes obtenus enzymatiquement par réaction d'une charge de diacylglycérophospholipides avec de la phospholipase A.

7. Procédé selon la revendication 5, caractérisé en ce que les monoacylglycérophospholipides exogènes ajoutés à la pâte sont eux-mêmes obtenus chimiquement par traitement à l'acide ou à l'alcali d'une charge d'alimentation de diacylglycérophospholipides.

8. Modification du procédé revendiqué dans la revendication 5, 6 ou 7, caractérisée en ce que l'on incorpore le monoacylglycérophospholipide exogène au gluten après séchage.

9. Gluten élastique caractérisé par une teneur en phospholipide lié de 2% (en poids) et une teneur en monoacylglycérophospholipide lié qui vaut au moins 30 mole%, mais moins de 50 mole%, de la teneur totale en phospholipide lié.

10. Gluten élastique caractérisé en ce que la teneur en monoacylglycérophospholipide lié vaut 50 mole%, ou plus, de la teneur totale en phospholipide lié.

11. Gluten élastique selon la revendication 10, caractérisé par une teneur totale en phospholipide lié de 2% (en poids) ou plus.

12. Une denrée alimentaire contenant du gluten élastique comme agent améliorant, caractérisée en ce que le gluten élastique est un produit obtenu par un procédé selon l'une quelconque des revendications 1 à 8, ou tel que revendiqué dans l'une quelconque des revendications 9 à 11.